# EUROPÄISCHE PATENTANMELDUNG

(11) **EP 1 443 294 A1**
(43) Veröffentlichungstag der Anmeldung: **04.08.2004**
(21) Anmeldenummer: 03290190.2
(22) Anmeldetag: 23.01.2003
(51) Int. Cl.: F28F 9/04, F28D 1/053, F28F 9/02

(54) **Wärmeübertrager**

(71) Anmelder: BEHR Lorraine S.A.R.L., 57912 Hambach Cedex (FR)
(72) Erfinder: Kaczmarek, Fabrice, 67700 Saverne (FR); Meyer, Jean-Claude, F-57200 Wiesviller (FR)
(74) Vertreter: Grauel, Andreas, Dr.

(57) **Zusammenfassung**

Die Erfindung betrifft einen Wärmeübertrager (1), insbesondere für Kraftfahrzeugklimaanlagen mit zumindest einem Sammelrohr (4) und einem am Sammelrohr (4) fixierten Halter (16).

## Beschreibung

Die Erfindung betrifft einen Wärmeübertrager, insbesondere für Kraftfahrzeugklimaanlagen nach dem Oberbegriff des Patentanspruches 1.

Wärmeübertrager bestehen häufig im Wesentlichen aus einem Wärmeübertragernetz oder Rohr/Rippenblock und beiderseits angeordneten Sammelrohren. Die Rohre des Wärmeübertragernetzes sind meist Flachrohre, zwischen denen Wellrippen zur Vergrößerung der luftseitigen Wärmeaustauschfläche angeordnet sind. Die Flachrohre sind mit ihren Enden in Durchzügen der Sammelrohre aufgenommen. Diese Teile des Kondensators werden zunächst mechanisch zusammengefügt und dann in einem Arbeitsgang in einem Lötofen gelötet. Die Teile bestehen oft aus einer Aluminiumlegierung und weisen an ihrer Oberfläche eine Lotplattierung auf. Zusätzlich weisen viele solcher Wärmeübertrager Anschlussrohre auf, d. h. beispielsweise ein Kältemitteleintrittsrohr für die gasförmige Phase und ein Kältemittelaustrittsrohr für die flüssige Phase eines Kältemittels. Die Anschlussrohre werden beispielsweise über einen Flansch mit den Kältemittelleitungen des Kältemittelkreislaufes einer Kraftfahrzeugklimaanlage verbunden. Bisher hat man die Kältemittelanschlussrohre nach dem Lötprozess von Hand, d. h. mit einer Lötflamme in entsprechende Öffnungen des Sammelrohres eingelötet, und auch der Flansch wurde erst nach dem Lötprozess montiert, z. B. an einem Halter, der bereits im Lötofen an das Sammelrohr angelötet wurde, befestigt. Das Problem beim Verlöten zusätzlicher Teile mit dem Wärmeübertrager im Lötofen besteht darin, diese zusätzlichen Teile zu fixieren, damit sie während des Lötprozesses ihre vorbestimmte Position beibehalten und der Kondensator nach dem Lötprozess auch bezüglich dieser Zusatzteile maßhaltig ist. Zur Fixierung solcher Zusatzteile ist es bekannt, Lötvorrichtungen zu verwenden, welche die zu verlötenden Teile in der gewünschten Position halten. Nach dem Löten muss die Lötvorrichtung entfernt werden. Solche Lötvorrichtungen sind nachteilig, da sie zusätzliche Montagezeit verursachen und darüber hinaus Energie durch ihre Aufwärmung verbrauchen.

Es ist Aufgabe der vorliegenden Erfindung, einen Wärmeübertrager der eingangs genannten Art dahingehend zu verbessern, dass ein Halter ohne Lötvorrichtung oder ähnliche Hilfsmittel im Lötofen gleichzeitig mit dem Wärmeübertrager lötbar und nach dem Lötprozess in seiner bestimmungsgemäßen Position verlötet ist.

Diese Aufgabe wird durch die Merkmale des Patentanspruches 1 gelöst. Erfindungsgemäß geschieht dies dadurch, dass durch einen Formschluss eine Fixierung erreicht wird, die ausreicht, um den Halter während des Lötprozesses in seiner Position zu halten. Damit wird der Vorteil erreicht, dass der Halter ohne Lötvorrichtung und ähnliche Hilfsmittel in einem Arbeitsgang mit dem Wärmeübertrager gelötet werden kann. Dies spart erhebliche Montagezeit und reduziert die Herstellungskosten des Wärmeübertragers. Vorteilhafte Ausgestaltungen der Erfindung ergeben sich aus den Unteransprüchen.

Nach einer ersten vorteilhaften Ausgestaltung der Erfindung ist der Halter in seiner Form an die Außenform des Sammelrohres angepasst. Insbesondere ist der Halter mit einem C-Profil ausgebildet, welches in seiner Rundung der Rundung des Sammelrohres angepasst ist und dieses umfasst. Dadurch ergibt sich im Bereich der Kontaktfläche eine Verlötung. Vorteilhaft ist es ferner, wenn das C-Profil mit dem Sammelrohr verclipst ist. Dies kann durch entsprechende Rast- oder Klemmelemente an den Schenkeln des C-Profils erreicht werden. Der Halter mit dem C-Profil wird also bei der Montage einfach von oben auf das Sammelrohr gedrückt und ist dann nach der Verclipsung fixiert.

Eine vorteilhafte Weiterbildung sieht vor, dass das Sammelrohr zweiteilig ausgebildet ist, also aus einem Boden- und einem Deckelteil besteht, welche über zwei Längsnähte miteinander verlöten. Da sich Deckel- und Bodenteil im Bereich der Längsnähte überlappen, entsteht im Bereich der Längskante ein Absatz. In diesen Absatz greift das C-Profil mit seinen Schenkeln ein bzw. stützt sich an diesem Absatz ab. Dadurch wird eine weitere Verbesserung der Fixierung des Halters erreicht, insbesondere wenn gleichzeitig eine Verclipsung erfolgt.

Nach einer weiteren vorteilhaften Ausgestaltung der Erfindung ist ein Flansch zur Halterung von Anschlussrohren mittels des Halters an dem Sammelrohr befestigt, insbesondere über einen Steg. Bevorzugt ist der Halter einstückig mit dem Flansch ausgebildet, wobei die Ausbildung als extrudiertes Profil besonders vorteilhaft ist. Der Halter muss somit nicht nach dem Lötprozess mit dem Flansch verbunden werden, z. B. durch zusätzliche Schrauben oder Niete. Somit ist der Flansch über den Halter gegenüber dem Sammelrohr fixiert und kann mit dem Wärmeübertrager zusammen gelötet werden. Dadurch wird nochmals Montagezeit eingespart.

Nach einer vorteilhaften Weiterbildung der Erfindung sind auch die Anschlussrohre am Flansch und am Sammelrohr fixiert, sodass auch diese Teile zusammen mit dem Wärmeübertrager in einem Arbeitsgang dicht gelötet werden können. Auch dieser Schritt bedeutet eine Verkürzung der Herstellzeit und eine Reduzierung der Fertigungskosten.

In einer weiteren Ausgestaltung der Erfindung weist der Halter die Form eines plattenförmigen Steges mit abgebogenen Seitenflächen oder Schenkeln auf, deren Unterkanten an die Rundung des Sammelrohres angepasst sind. Damit haben diese abgebogenen Schenkel eine Stützfunktion, sodass der Halter auf dem Sammelrohr während der Lötprozesse nicht kippen kann, sondern fixiert ist. Somit erfolgt auch bei dieser Ausbildung des Halters eine Fixierung durch einen Formschluss.

Nach einer vorteilhaften Weiterbildung der Erfindung weist der Halter an seiner Unterkante eine Fahne auf, die in einen entsprechenden Schlitz im Sammelrohr gesteckt wird. Damit wird eine weitere Verbesserung der Fixierung des Halters gegenüber dem Sammelrohr erreicht, da hierdurch ein weiter Formschluss gegeben ist. Somit kann dieser Halter, der der nachträglichen Befestigung des Rohrflansches dient, maßhaltig zusammen mit dem Wärmeübertrager im Lötofen gelötet werden.

Gemäß einer weiteren Ausführungsform ist der Wärmeübertrager als Kondensator ausgebildet und vorzugsweise gelötet. Wegen einer einfachen Fertigung besonders vorteilhaft sind dabei Wärmeübertragungsrohre und ―rippen, die einen Rohr/Rippenblock bilden.

Ausführungsbeispiele der Erfindung sind in der Zeichnung dargestellt und werden im Folgenden näher beschrieben. Es zeigen
- Fig. 1: einen Kondensator mit Flansch,
- Fig. 2: ein Sammelrohr des Kondensators,
- Fig. 3: den Flansch mit einem Halter als Ansicht,
- Fig. 3a: den Flansch in einer perspektivischen Ansicht,
- Fig. 4: das Sammelrohr mit montiertem Flansch und Anschlussrohren,
- Fig. 5: ein zweites Ausführungsbeispiel eines Kondensators mit Halter,
- Fig. 6: den Halter gemäß Fig. 5,
- Fig. 6a: eine Ansicht von oben auf den Halter nach Fig. 6 und
- Fig. 6b: eine Ansicht von der Seite auf den Halter nach Fig. 6.

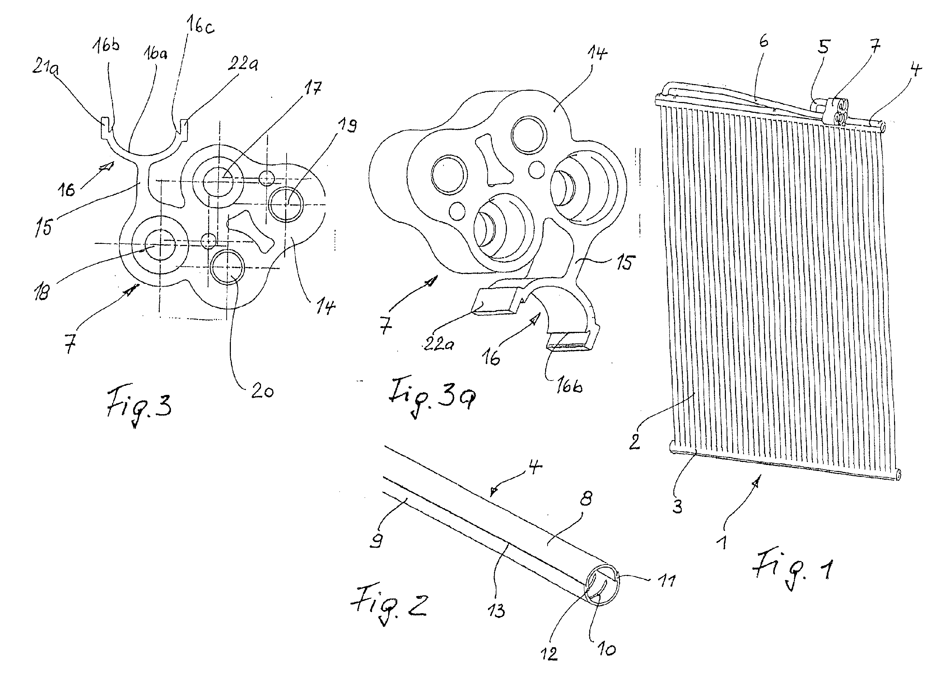

**Fig. 1** zeigt einen Kondensator 1 mit einem Rohr/Rippenblock 2, einem unteren Sammelrohr 3 und einem oberen Sammelrohr 4. Der Rohr/Rippenblock 2 besteht ― wie bekannt ― aus nicht näher dargestellten Flachrohren und zwischen diesen angeordneten Wellrippen. Am oberen Sammelrohr 4 sind zwei Kältemittelanschlussrohre angeordnet, nämlich ein Kältemitteleintrittsrohr 5 und ein Kältemittelaustrittsrohr 6, die einerseits in das Sammelrohr 4 münden und andererseits in einem Flansch 7 gehalten sind.

**Fig. 2** zeigt das Sammelrohr 4 des Kondensators 1 gemäß Fig. 1 teilweise in perspektivischer Ansicht. Das Sammelrohr 4 ist zweiteilig ausgebildet, d. h. es besteht aus einem Deckel 8 und einem Boden 9, welcher schlitzförmige Durchzüge 10 zur Aufnahme der Flachrohre des Rohr/Rippenblockes 2 aufweist. Die jeweils etwa halbzylinderförmig ausgebildeten Deckel- und Boddenteile 8, 9 überlappen sich im Bereich zweier Längsnähte 11, 12 und bilden dadurch abgesetzte Längskanten 13, d. h. in Richtung der Längskanten 13 verlaufende Absätze.

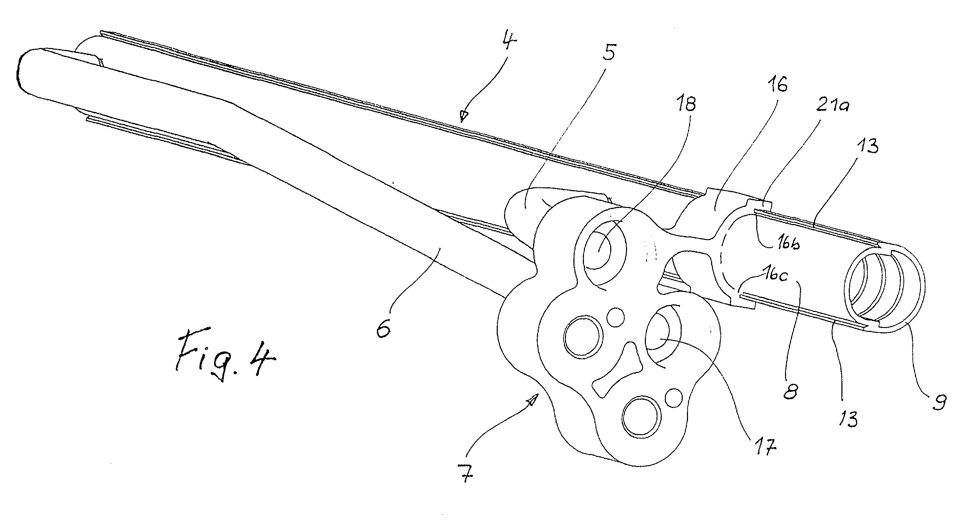

**Fig. 3** zeigt den Flansch 7 aus Fig. 1 als Einzelteil, und zwar als Ansicht in Richtung der Längsachse des Sammelrohres 4. Der Flansch 7 ist als extrudiertes Profil aus einer Aluminiumstrangpresslegierung hergestellt und weist einerseits einen Block 14, einen Steg 15 und einen als C-Profil ausgebildeten Halter 16 auf. Der Block 14 weist zwei Durchtritts- bzw. Anschlussöffnungen 17, 18 für die Befestigung der Anschlussrohre 5, 6 und den Anschluss von nicht dargestellten Kältemittelleitungen auf. Die weiteren Bohrungen 19, 20 dienen der Befestigung eines nicht dargestellten Anschlussflansches für die Kältemittelleitungen. Das C-Profil 16 weist eine konkave Innenfläche 16a auf, die in ihrer Rundung der Kontur des Deckels 8 des Sammelrohres 4 angepasst ist. Ferner ist der Halter 16 durch zwei Schenkel bzw. Arme 21, 22 gekennzeichnet, die jeweils in einem flachen Endbereich 21a, 22a enden, wobei das konkave Innenprofil 16 a über Längskanten 16b, 16c gegenüber den flachen Endbereichen 21a, 22a abgesetzt ist.

**Fig. 3a** zeigt den Flansch 7 gemäß Fig. 3 in einer perspektivischen Darstellung. Man erkennt den flach ausgebildeten Steg 15, der die Verbindung zwischen Halter 16 und Block 14 herstellt und gleichzeitig eine gewisse Elastizität schafft.

**Fig. 4** zeigt den Flansch 7 mit Halter 16, montiert auf dem Deckel 8 des Sammelrohres 4 zusammen mit den Kältemittelanschlussrohren 5 und 6. Man sieht, dass der Halter 16 mit seinem C-Profil den Deckel 8 umgreift und sich mit seinen Längskanten 16c, 16b gegenüber den Längskanten 13 des Sammelrohres 4 abstützt. Die flachen Endbereiche 21a, 22a umklammern das Sammelrohr 4 bzw. den Boden 9 und bewirken gleichzeitig eine Verclipsung von Halter 16 mit Sammelrohr 4, was allerdings im einzelnen nicht dargestellt ist. Jedenfalls ergibt sich durch diese Umklammerung des Halters 16 eine Fixierung des Flansches 7 gegenüber dem Sammelrohr 4, was durch die gleichzeitige Fixierung der Kältemittelanschlussrohre 5,6 unterstützt wird. Diese sind ― auf nicht näher dargestellte Weise ― mit ihren Enden in entsprechende Öffnungen des Deckels 8 eingesetzt und dort verklemmt. Entsprechend sind die anderen Enden der Kältemittelanschlussrohre 5, 6 in den Bohrungen 17, 18 des Flansches 7 aufgenommen. Insofern ist der Flansch 7 an drei Punkten gegenüber dem Sammelrohr 4 abgestützt und fixiert, nämlich einerseits durch die Kältemittelanschlussrohre 5, 6 und andererseits über den Halter 16. Der gesamte Kondensator kann somit mit den in Fig. 4 dargestellten Teilen in einem Schuss in einem nicht dargestellten Lötofen gelötet werden. Nach dem Löten sind die Kältemittelanschlussrohre 5, 6 sowohl mit dem Sammelrohr 4 als auch mit dem Flansch 7 dicht verlötet, und das C-Profil 16 ist im Bereich seiner Kontaktfläche 16a, 16b, 16c sowie 21a, 22a mit Deckel 8 und Boden 9 (beide sind lotplattiert) verlötet.

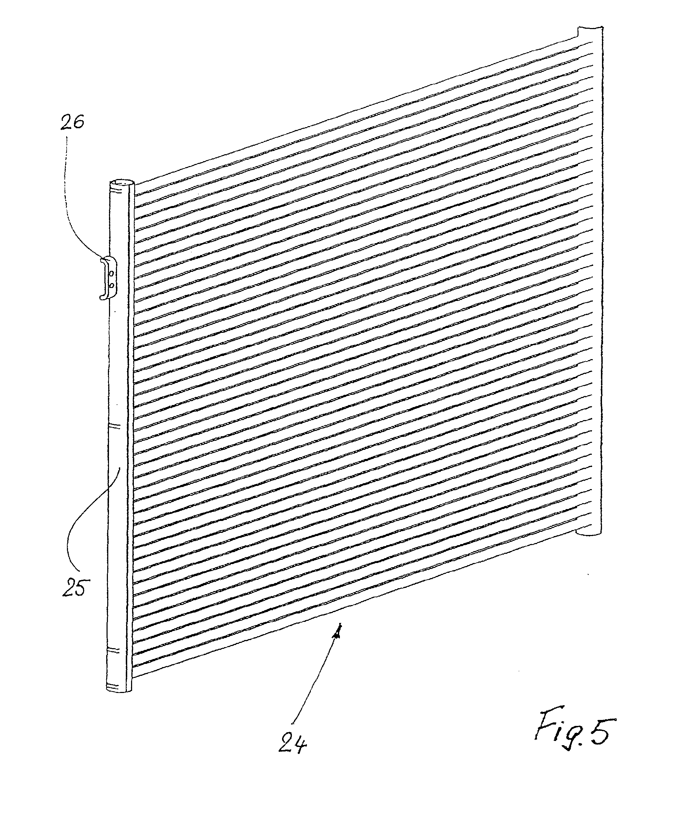

**Fig. 5** zeigt ein weiteres Ausführungsbeispiel der Erfindung, und zwar einen Kondensator 24 mit einem oberen Sammelrohr 25, an welchem ein Halter 26 befestigt ist. Der Halter 26 wird ― wie im Folgenden noch erläutert wird ― vor dem Lötprozess an dem Sammelrohr 25 fixiert und anschließend zusammen mit dem gesamten Kondensator 24 im Lötofen verlötet. Für die Fixierung des Halters 26 auf dem Sammelrohr 25 ist eine besondere Formgebung erforderlich, die nachfolgend erläutert wird.

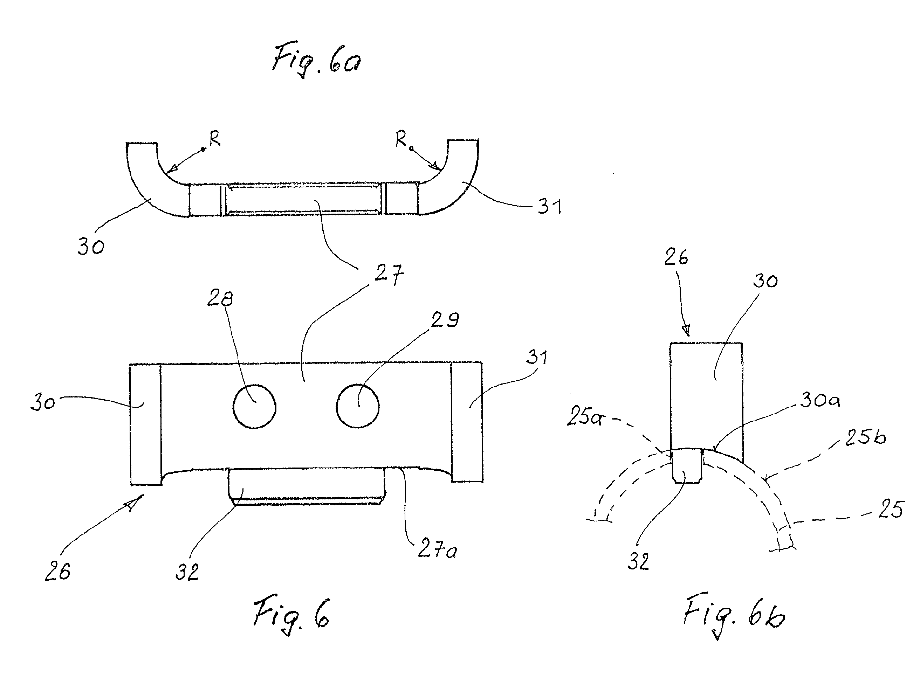

**Fig. 6** zeigt den Halter 26 aus Fig. 5 als Einzelteil. Fig. 6a zeigt den Halter 26 in einer Ansicht von oben und Fig. 6b in einer Ansicht von der Seite. Der Halter 26 weist ein ebenes, als Befestigungsplatte ausgebildetes, mittleres Stegteil 27 auf, in welchem zwei Befestigungsbohrungen 28, 29 angeordnet sind. Beiderseits des mittleren Stegteiles 27 weist der Halter 26 etwa rechtwinklig mit einem Radius R abgebogene bzw. abgewinkelte Schenkel 30, 31 auf. Wie Fig. 6a zeigt, ergibt sich durch den mittleren Steg 27 und die beiden abgewinkelten Schenkel 30, 31 eine Art U-Profil. Der Halter 26 weist im Bereich des Mittelsteges 27 eine Unterkante 27a auf, an welche sich eine so genannte Fahne 32 anschließt.

**Fig. 6b** zeigt den Halter 26 von der Seite, wobei das Sammelrohr 25 aus Fig. 5 hier gestrichelt dargestellt ist. Das Sammelrohr 25 weist in seinem oberen Bereich einen Schlitz 25a auf, der hinsichtlich seiner Abmessungen in Länge und Breite denen der Fahne 32 entspricht. Der Halter 26 wird also zur Fixierung zunächst mit seiner Fahne 32 in den Schlitz 25a des Sammelrohres gesteckt, sodass die Unterkante 27a des Steges 27 auf dem Sammelrohr 25 aufliegt. Der seitliche Schenkel 30 weist eine bogenförmige Unterkante 30a auf, die der Kontur 25b des Sammelrohres 25 angepasst ist. Dasselbe gilt für den in Fig. 6b nicht sichtbaren seitlichen Schenkel 31, der eine entsprechende bogenförmige Unterkante 31 a aufweist. Somit liegen die beiden Schenkel 30, 31 mit ihren Unterkanten vollflächig auf dem Sammelrohr 25 auf und stellen damit sicher, dass der Halter 26 in der in Fig. 6b dargestellten Position bleibt, d. h. insbesondere nicht zur Seite kippt. Dies ist insofern wichtig, als an dem Mittelsteg 27 ― nach dem Löten - ein Flansch zum Anschluss von Kältemittelleitungen befestigt wird. Der Halter 26 ist somit hinreichend fixiert und kann mit dem Kondensator zusammen im Lötofen gelötet werden, ohne dass sich seine Position wesentlich verändert.

## Patentansprüche

1. Wärmeübertrager (1), insbesondere für Klimaanlagen, insbesondere für Kraftfahrzeuge, mit zumindest einem Sammelrohr (4, 5) und einem an einem Sammelrohr (4) befestigten Halter, **dadurch gekennzeichnet, dass** der Halter (16, 26) durch Formschluss am Sammelrohr fixierbar ist.

2. Wärmeübertrager nach Anspruch 1, **dadurch gekennzeichnet, dass** der Halter (16, 26) an die Außenform des Sammelrohres (4, 25) angepasst ist.

3. Wärmeübertrager nach einem der vorhergehenden Ansprüche, **dadurch gekennzeichnet, dass** der Halter die Form eines C-Profils (16) aufweist, welches das Sammelrohr (4) umfasst.

4. Wärmeübertrager nach einem der vorhergehenden Ansprüche, **dadurch gekennzeichnet, dass** der Halter, insbesondere das C-Profil (16), mit dem Sammelrohr (4) verclipst ist.

5. Wärmeübertrager nach einem der vorhergehenden Ansprüche, **dadurch gekennzeichnet, dass** das Sammelrohr (4) zweiteilig ausgebildet ist und einen Deckel (8) sowie einen Boden (10) aufweist, die abgesetzte Längskanten (13) bilden, und dass das C-Profil (16) Schenkel (21, 22) mit Enden (21a, 22a) aufweist, die auf den Längskanten (13) abgestützt sind.

6. Wärmeübertrager nach einem der vorhergehenden Ansprüche, **dadurch gekennzeichnet, dass** ein Flansch (7) zur Halterung von Anschlussrohren (5, 6) mittels des Halters an dem Sammelrohr befestigt ist.

7. Wärmeübertrager nach Anspruch 6, **dadurch gekennzeichnet, dass** der Halter einen Steg (15) aufweist, über den der Halter (16) mit dem Flansch (7, 14) verbunden ist.

8. Wärmeübertrager nach Anspruch 6 oder 7, **dadurch gekennzeichnet, dass** der Halter (16) einstückig, insbesondere als extrudiertes Teil, mit dem Flansch (7) ausgebildet ist.

9. Wärmeübertrager nach einem der Ansprüche 6 bis 8, **dadurch gekennzeichnet, dass** die Anschlussrohre (5, 6) endseitig einerseits am Sammelrohr (4) und andererseits am Flansch (7) fixierbar und insbesondere gleichzeitig mit dem Flansch (7) und dem Wärmeübertrager (1) verlötbar sind.

10. Wärmeübertrager nach einem der vorhergehenden Ansprüche, **dadurch gekennzeichnet, dass** der Halter (26) die Form eines Steges (27) mit einer geraden Unterkante (27a) und mit abgebogenen Schenkeln (30, 31) mit Unterkanten (30a, 31a) aufweist und dass der Halter (26) mit seinen Unterkanten (27a, 30a, 31a) stehend auf dem Sammelrohr (25) angeordnet ist, wobei die Unterkanten (30a, 31a) der Schenkel (30, 31) an die Rundung (25b) des Sammelrohres (25) angepasst sind.

11. Wärmeübertrager nach Anspruch 10, **dadurch gekennzeichnet, dass** der Steg (27) als Halteplatte mit Befestigungsöffnungen (28, 29) und die Schenkel (30, 31) als Stützelemente ausgebildet sind.

12. Wärmeübertrager nach einem der vorhergehenden Ansprüche, **dadurch gekennzeichnet, dass** der Halter (26), insbesondere im Bereich des Steges (27), an seiner Unterkante (27a) eine Fahne (32) aufweist, die in einen Schlitz (25a) im Sammelrohr (25) steckbar ist.

13. Wärmeübertrager nach einem der vorhergehenden Ansprüche, **dadurch gekennzeichnet, dass** der Wärmeübertrager ein insbesondere gelöteter Kondensator ist, wobei der Wärmeübertrager insbesondere zu einem Rohr/Rippenblock zusammengefasste Wärmeübertragungsrohre und ―rippen aufweist.
